Europäisches Patentamt

European Patent Office

Office européen des brevets

(19)

(11) Numéro de publication : **0 221 795 B1**

(12)

# FASCICULE DE BREVET EUROPEEN

(45) Date de publication du fascicule du brevet :
03.04.91 Bulletin 91/14

(51) Int. Cl.⁵ : **E04H 3/22, E04B 1/343**

(21) Numéro de dépôt : **86402109.2**

(22) Date de dépôt : **25.09.86**

(54) Espace scénique à développements spaciaux multiples.

(30) Priorité : **27.09.85 FR 8514565**

(43) Date de publication de la demande :
**13.05.87 Bulletin 87/20**

(45) Mention de la délivrance du brevet :
**03.04.91 Bulletin 91/14**

(84) Etats contractants désignés :
**AT BE CH DE FR GB IT LI LU NL SE**

(56) Documents cités :
**CH-A- 616 114
DE-A- 2 420 504
NL-A- 7 014 399
US-A- 3 217 366
US-A- 3 719 386**

(73) Titulaire : **EUTERPE
Le Fief du Parc Z.I. de Gétigne
F-44190 Clisson (FR)**

(72) Inventeur : **Berranger, Yvon
7, rue du Muguet
F-44230 St-Sebastien sur Loire (FR)**
Inventeur : **Bouchard, Jean-Maurice
13, rue Louis Blanc
F-53000 Laval (FR)**
Inventeur : **Guerin, Yves
61, rue de la Poste
F-44240 Suce Sur Loire (FR)**
Inventeur : **Sorin, Jean-Marc
Les Moulins du Donand
F-44330 Vallet (FR)**

(74) Mandataire : **Phélip, Bruno et al
c/o Cabinet Harlé & Phélip 21, rue de La
Rochefoucauld
F-75009 Paris (FR)**

## Description

La présente invention concerne un espace scénique à développements spatiaux multiples et plus particulièrement, mais non exclusivement, un kiosque à musique mobile.

De longue date, on a édifié des scènes ou des kiosques à musique dans des endroits fréquentés comme les parcs et jardins et on en installe encore aujourd'hui, mais le plus souvent à titre temporaire, pour des représentations diverses.

L'installation temporaire d'un kiosque en plein air ou dans une salle présente l'inconvénient du montage puis du démontage de la scène d'une part, et, d'autre part, l'inconvénient de ne procurer la plupart du temps qu'une piètre acoustique, laquelle d'ailleurs ne constitue généralement qu'un souci mineur. D'une manière générale, ces installations temporaires constituent une charge importante pour les organisateurs. Le souci de développer la culture musicale par une plus grande présence des orchestres ou des groupes n'est guère compatible avec les moyens actuels.

La présente invention vise à remédier à ces inconvénients en proposant un espace scénique adaptable aux besoins de toutes sortes et permettant de satisfaire aux conditions particulières liées à une exploitation musicale et notamment au problème de l'acoustique.

L'invention a également pour objet de décharger les organisateurs de spectacles des contraintes habituelles de montage et de démontage de la scène.

Il est connu de réaliser des salles et structures mobiles dont la surface et/ou le volume sont variables. Dans les documents CH-A-616.114, US-A-3.217.366, DE-A-2.420.504 ou encore NL-A-7 014 399, ces salles ou structures sont aménagées à partir d'une remorque qui renferme tous les éléments de planchers et/ou de parois destinés à réaliser cette augmentation de la surface de base limitée au départ au gabarit du châssis de la remorque.

La semi-remorque convertible en salle polyvalente, telle que décrite dans le document CH-A-616.114, présente la possibilité de multiplier au moins par trois la surface de base de la semi-remorque.

Cet accroissement de surface est réalisé au moyen d'un plancher réalisé en plusieurs parties qui sont pliées en accordéon ou roulées sur elles-mêmes. La mise en place d'une telle structure est relativement longue car elle nécessite un calage sérieux et précis des planchers déployés, sans parler de l'installation du mât qui soutient la couverture.

Le document US-A-3.217.366 illustre un mode de réalisation nettement plus simple d'une remorque à surface variable ; cette dernière peut être doublée au moyen de praticables qui sont normalement stockés sur le plancher de la remorque puis mis en place devant celle-ci selon les besoins. Une telle structure n'offre qu'une possibilité limitée d'accroissement de la surface de base.

Dans le document DE-A-2.420.504, la remorque comporte des moyens qui permettent de réaliser un quasi-doublement de la surface de base au moyen d'un plancher qui coulisse vers l'arrière soutenu par une structure ancrée sur le sol et à la remorque. Là encore, les possibilités d'extension de la surface de base sont limitées, et la structure est complexe, notamment au niveau de la couverture.

Le document NL-A-7 014 399 montre une installation pour forains. Cette installation consiste en un châssis de base muni de développements longitudinaux coulissant, vers l'avant et vers l'arrière, sous le châssis de base.

L'invention propose un espace scénique dont la structure de base est un châssis allongé, reposant sur pieds ou béquilles, et de préférence sur roues ; cette structure de base comporte au moins un développement latéral se présentant sous la forme d'au moins un plancher mobile pouvant constituer par ailleurs, un niveau décalé par rapport au plancher central disposé sur le châssis.

Selon l'invention, l'espace scénique comporte des développements latéraux de part et d'autre du plancher central, constitués d'une part, sur l'arrière de la scène et formant un niveau supérieur, un plancher haut coulissant sur le plancher central et, d'autre part, sur la partie avant de la scène et formant les niveaux inférieurs, un plancher bas coulissant sous le plancher central. Ce plancher bas est constitué d'un ou de plusieurs niveaux en gradin et il est associé, de part et d'autre, à des planchers latéraux en forme de quart pivotant autour d'un axe vertical situé à proximité des coins du plancher central, du côté du plancher bas.

Selon une autre disposition de l'invention, ces quarts pivotants sont disposés entre le plancher central et le plancher bas, obturant en position repliée, l'espace entre ces derniers planchers ; ils supportent ledit plancher bas lors de son déploiement et aussi en position déployée.

Selon l'invention, le plancher bas est soutenu par les quarts pivotants au moyen d'un système de guidage constitué, sur la face du quart pivotant orientée vers ledit plancher bas, d'un rail de guidage et, sur le plancher bas, d'un galet monté sur un bras escamotable dans un logement dans le plancher et positionné par pivotement autour d'un axe parallèle au sens d'avancement dudit plancher bas ; les galets et leur bras support sont escamotables pour permettre le repliement des quarts pivotants au-dessus du plancher bas.

Toujours selon l'invention, le plancher central se prolonge longitudinalement par des plates-formes surélevées se terminant en pointe, à chaque extrémité du châssis ; ces plates-formes se situent à un niveau inférieur au niveau du plancher haut qui les recouvre partiellement et elles comportent, du côté des quarts pivotants, un secteur pivotant articulé autour d'un axe vertical situé sensiblement à la pointe de la plate-forme ; ce secteur pivotant constitue un niveau de plancher intermédiaire entre le quart et la plate-forme ; par ailleurs, en position déployée, l'arête externe du secteur pivotant se situe dans le prolongement de l'arête de la plate-forme, côté plancher haut.

L'espace scénique selon l'invention peut comporter également une structure couvrante expansible. Dans ce cas, l'espace scénique prend une forme de conque divisé en trois corps : un corps central sur le châssis de base constitué du plancher central, de parois verticales et d'une couverture, d'un corps arrière coulissant en forme de coffre bâti sur le plancher haut, un corps avant constitué par le plancher bas, les quarts pivotants et un auvent rabattable servant aussi de paroi, en position fermée, pour le corps central. La structure couvrante expansible se compose d'une ferme centrale reposant sur deux poteaux situés aux pointes des plates-formes extrêmes, et de deux fermes latérales situées dans un plan vertical passant par la bordure du plancher central ; l'une des fermes latérales soutenant un auvent basculant, l'autre ferme assurant le maintien d'un coffre formé à partir du plancher haut et le contreventement de l'ensemble de la couverture centrale.

Selon une disposition préférentielle de l'invention, des panneaux assurent la jonction entre la structure couvrante et le châssis ; un panneau fixe est disposé selon une arête de chaque plate-forme, un panneau articulé sur le poteau central et solidaire de l'arête du secteur pivotant, couvre l'autre arête de ladite plate-forme.

Selon une autre disposition de l'invention, les panneaux verticaux solidaires des secteurs pivotants, supportent d'une part, des couvertures de jonction qui s'étendent jusqu'à l'auvent en position déployée et, d'autre part, des panneaux complémentaires d'obturation qui s'étendent jusqu'à l'auvent lorsqu'il est dans sa position repliée formant une paroi verticale, le long de la bordure du plancher central. Les panneaux complémentaires sont de forme polygonale, l'un est fixe et solidaire d'une charpente mobile avec le secteur pivotant, l'autre est articulé sur l'auvent pour être rabattu vers l'intérieur du kiosque lors du repliement de l'ensemble.

Un autre objet de l'invention est de réaliser un véhicule dont l'espace scénique est mis en volume très rapidement et sans effort, avec le concours d'un seul opérateur.

Selon l'invention, les éléments mobiles se déploient d'une part, par pivotement autour d'axes verticaux pour les quarts et secteurs pivotants et d'un axe horizontal pour l'auvent, le mouvement de ce dernier étant assuré par au moins un vérin, et, d'autre part, par translation pour le plancher bas et le plancher haut formant coffre, ce dernier étant guidé par des moyens appropriés disposés de chaque côté du plancher central.

L'invention concerne encore le châssis de base destiné à recevoir les éléments constituant les différents niveaux de plancher et la couverture du kiosque. Ce châssis comporte notamment, à sa partie inférieure, pour le guidage du plancher bas, des rails qui s'étendent sur toute sa largeur et qui sont solidaires chacun d'un berceau supportant en plus, au moyen de tourillons, les axes des quarts pivotants. Le châssis comporte encore, à sa partie supérieure, au-dessus des berceaux précités, des coulisses s'étendant sur toute sa largeur également, destinées au guidage des coulisseaux solidaires du coffre arrière.

L'invention concerne encore un espace scénique obtenu par regroupement de plusieurs espaces de base autour d'un praticable conçu pour relier 2, 3 ou 4 modules de base par exemple.

L'invention sera mieux comprise à l'aide de la description suivante et des dessins annexés, donnés à titre indicatif et dans lesquels :

    – la figure 1 est une vue d'ensemble d'un kiosque ambulant selon l'invention, en perspective ;

    – la figure 2 est une vue de dessus du kiosque sans la couverture selon deux configurations :

        – A : la scène est déployée,

        – B : l'ensemble est en position refermée pour le transport ;

    – la figure 3 est une vue de côté selon le plan de coupe 3-3 ;

    – la figure 4 est une vue de détail en coupe agrandie, selon 4-4, montrant le guidage du plancher bas sur des quarts pivotants ;

    – la figure 5 est une vue de détail en coupe agrandie selon 5-5, montrant le système de guidage du plancher du coffre ;

    – la figure 6 est une coupe selon 6-6 du système de guidage de la figure 5 ;

    – la figure 7 est une vue latérale du châssis nu.

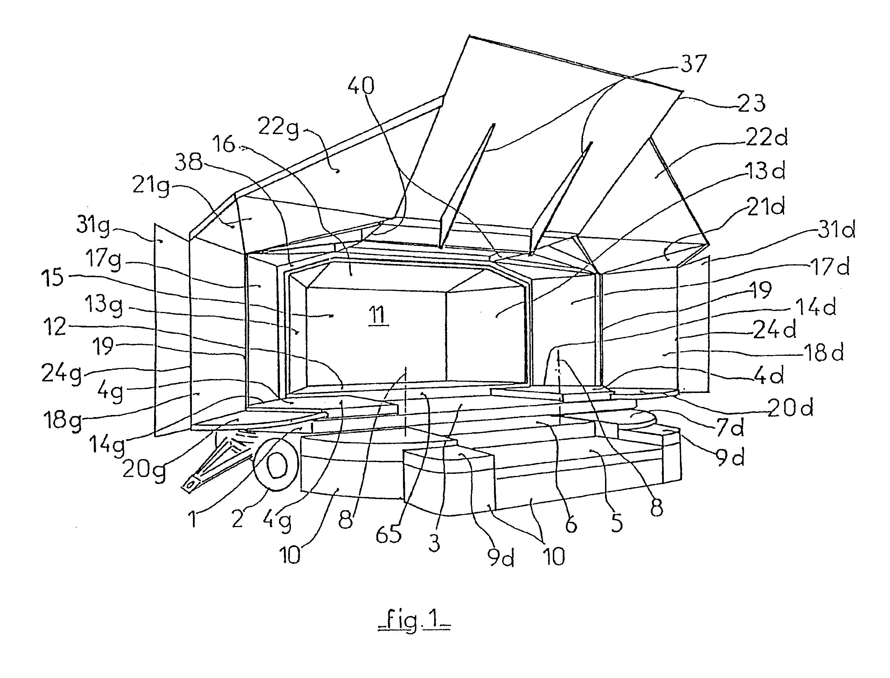

L'espace scénique représenté figure 1, est en position totalement déployée dans une configuration possible de kiosque ambulant pouvant recevoir un orchestre ou un groupe de musiciens. Le kiosque représenté figure 1, présente la particularité d'offrir une multitude de niveaux décalés en forme de gradin, le tout enveloppé avec des parois latérales et une couverture de façon à constituer une forme de pavillon qui offre ainsi une bonne concentration et diffusion de la musique.

Le kiosque est principalement constitué d'un châssis 1 pouvant former remorque et de ce fait être équipé de roues 2 disposées à l'avant et à l'arrière dudit châssis. La partie centrale supérieure du châssis 1 supporte un plancher central 3 carré ou rectangulaire ; ce plancher central 3 se prolonge de chaque côté du châssis 1, par des plates-formes surélevées 4d, 4g, qui se terminent en pointe, ou en Vé, à chaque extrémité du châssis 1.

Le kiosque est symétrique par rapport au plan médian vertical qui coupe transversalement le châssis de base 1 ; de ce fait, les repères seront identiques pour les éléments situés à droite ou à gauche d'un observateur placé devant le kiosque ; sur la figure 1, la partie gauche, telle que définie correspond également à l'avant du châssis 1 formant la remorque, alors que la partie droite correspond à l'arrière de la même remorque.

Devant le kiosque s'étend un plancher bas 5 et un plancher intermédiaire 6 posé sur la structure dudit plancher bas ; ce dernier est guidé en translation sous le châssis 1 et entre les deux éléments pivotants 7d, 7g disposés entre ledit châssis 1 et ledit plancher bas 5. Les moyens de guidage ci-dessus seront détaillés plus loin.

Les éléments pivotants 7 sont en forme de quart de cercle, ou d'ellipse, avec éventuellement des parties droites ; ces éléments pivotants 7, ou quarts 7, s'articulent autour d'axes verticaux 8d, 8g disposés sensiblement à chaque angle du plancher central 3, du côté du plancher bas 5. Lorsque le plancher bas 5 est en position totalement rentrée sous le châssis 1, les quarts 7 pivotent de 180° et se positionnent dans l'espace disponible entre ledit châssis 1 et ledit plancher bas 5 rentré ; de plus, ces quarts pivotants 7 forment, en position fermée, une paroi lisse sur le flanc du châssis 1.

Les quarts pivotants 7 sont présentés figure 1, avec des excroissances 9 formant des niveaux bas complémentaires entre le niveau desdits quarts pivotants 7 et le plancher bas 5. Ces excroissances 9 sont en forme de tiroir coulissant dans les quarts 7 ; en position sortie, ils s'étendent jusqu'à l'extrémité du plancher bas 5 ; en position rentrée, ils s'inscrivent totalement dans les quarts 7. On voit encore, figure 1, une jupe 10 complémentaire qui habille toute la façade du kiosque après déploiement des différents éléments. Cette jupe 10 est réalisée en matériau souple pouvant s'agrafer ou s'insérer par tronçon, dans des glissières adaptées.

La partie arrière du kiosque, au-delà du plancher central 3 est en forme de coffre 11, bâti sur un plancher haut 12, qui est situé à un niveau supérieur au niveau des plates-formes 4. Ce plancher haut 12 coulisse sur le plancher central 3 et sur les plates-formes 4, partiellement. Les moyens de guidage de ce plancher haut, et par là du coffre, d'une manière générale, seront décrits plus loin.

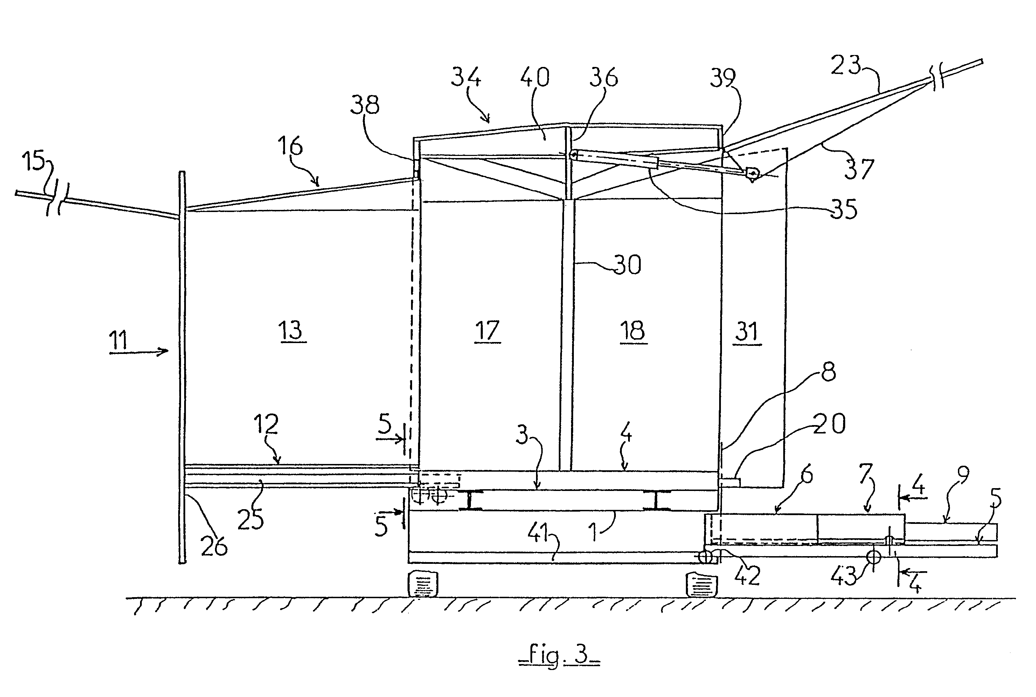

Le coffre 11 comporte des parois latérales verticales 13d et 13g disposées sensiblement dans le prolongement des arêtes 14d et 14g des plates-formes 4 lorsque le coffre est en position totalement sortie. Il comporte également une paroi verticale formant le fond 15 du kiosque et une couverture 16 constituée d'éléments disposés dans le prolongement de la couverture centrale du kiosque, c'est-à-dire la couverture recouvrant le châssis 1 ; cette dernière sera détaillée plus loin en liaison avec la figure 3. Les parois latérales du coffre 11 se prolongent également sur le châssis 1 par des parois verticales fixes 17d et 17g et des parois verticales pivotantes 18d et 18g, articulées autour d'axes 19 disposés sensiblement à la pointe des plates-formes 4. Ces parois pivotantes 18d et 18g sont solidaires de secteurs pivotants 20d et 20g, articulés autour du même axe vertical 19 ; ces secteurs pivotants 20 sont insérés dans l'épaisseur des plates-formes 4 et constituent un niveau de plancher intermédiaire entre le niveau des plates-formes 4 et celui des quarts pivotants 7

Les parois latérales pivotantes 18 supportent des éléments de couverture 21d et 21g en forme de quadrilatère, associés à des éléments couvrants triangulaires 22d et 22g qui s'étendent jusqu'à l'auvent 23 détaillé plus loin, figure 3.

Les éléments triangulaires 22 assurent la jonction entre les éléments 21 et l'auvent 23 ; ils sont articulés sur la bordure de l'auvent et se replient avec ce dernier.

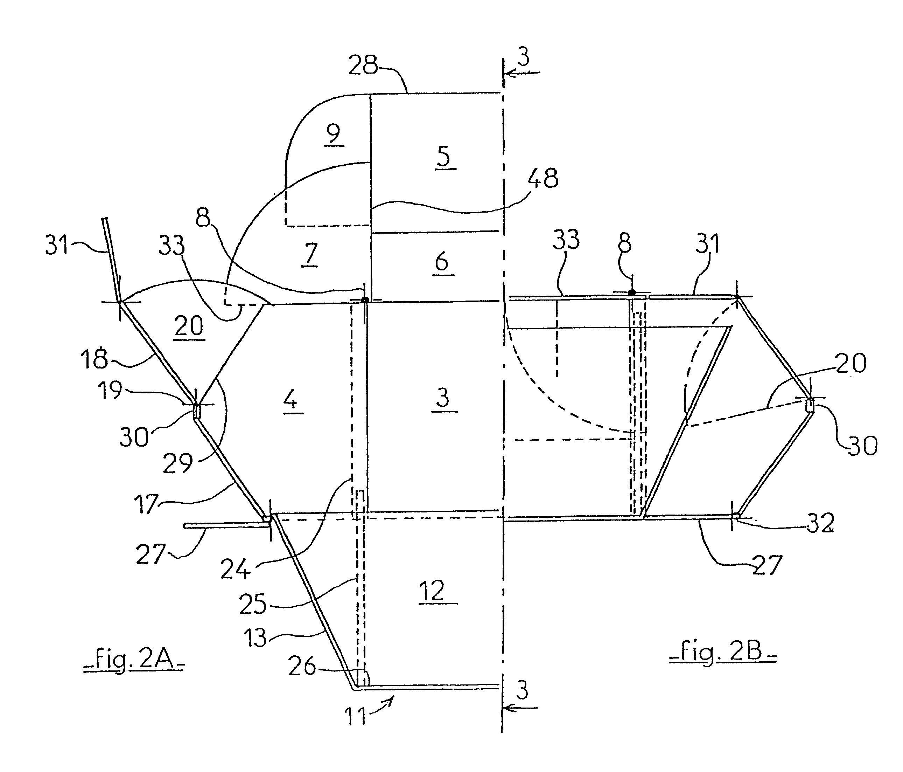

Des panneaux complémentaires 31d et 31g, dont le rôle sera explicité figure 2, sont articulés sur les arêtes verticales 24 respectives des panneaux pivotants 18.

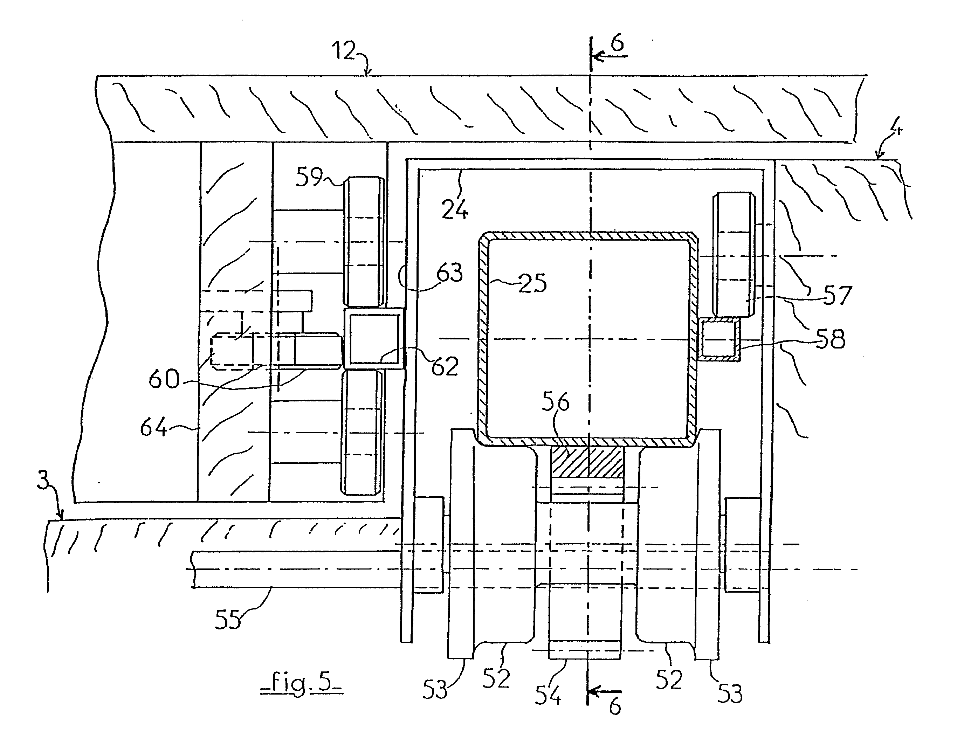

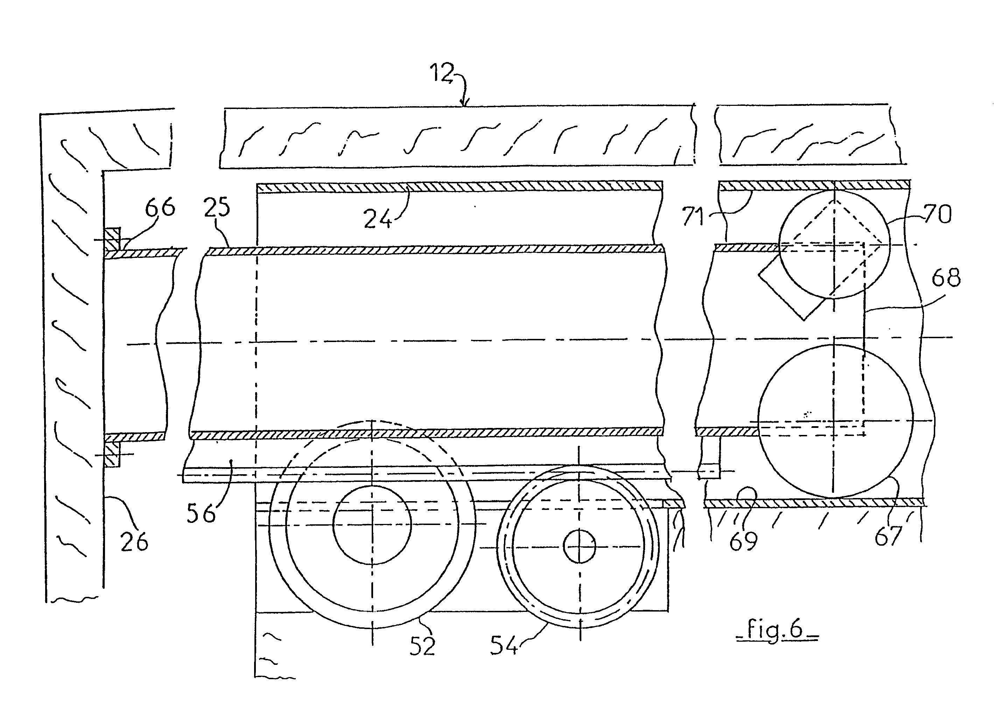

La figure 2A présente une moitié de l'ensemble des planchers du kiosque, dans la position totalement déployée, en vue de dessus. On retrouve ainsi le plancher central 3, rectangulaire, prolongé par la plate-forme 4 qui se termine en pointe. L'ensemble constitué par le plancher central 3 et les deux plates-formes 4 repose directement sur le châssis 1 et constitue la surface minimale du kiosque. Cette surface s'accroit d'un côté par la sortie totale ou partielle du plancher haut 12 du coffre 11, selon les besoins ; le coffre est représenté totalement sorti sur la figure 2A. Ce plancher 12 est guidé au moyen de la coulisse 24 disposée transversalement de chaque côté du plancher central 3, sous chaque plate-forme 4, et du coulisseau 25 solidaire du plancher 12 à son extrémité arrière 26 ; ces moyens de guidage seront détaillés plus loin, figures 5 et 6.

On distingue également, figure 2A, un panneau 27 en position ouverte ; ce panneau est destiné à obturer l'espace laissé entre le coffre 11 et l'extrémité de la paroi verticale 17, lorsque le coffre est en position rentrée.

La surface de base du kiosque s'accroit également au moyen du plancher bas 5 qui coulisse sous le châssis 1, et plus particulièrement sous le plancher central 3. Ce plancher bas 5 peut être constitué de deux niveaux grâce au plancher intermédiaire 6, formant ainsi un gradin.

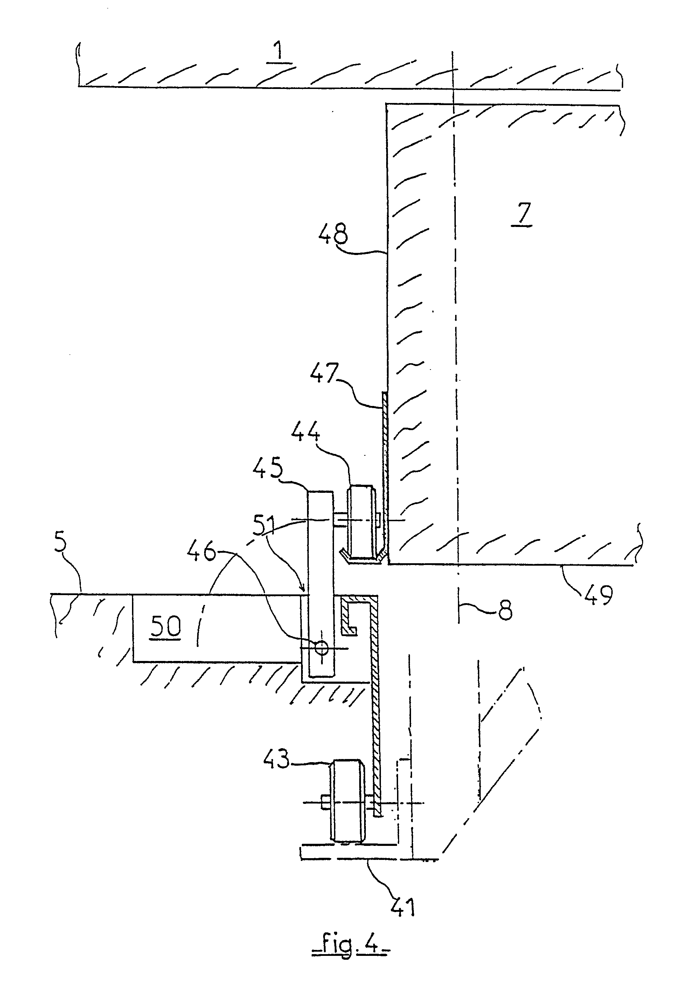

Sur le côté du plancher bas on distingue le quart pivotant 7 servant à la fois de support audit plancher bas par des moyens qui seront détaillés figure 4, et de plancher situé à un niveau équivalent, par exemple, à celui du plancher intermédiaire 6, c'est-à-dire entre le niveau du plancher central 3 et le niveau du plancher bas 5. Chaque quart pivotant 7 comporte également une excroissance 9 pouvant se déployer par coulissement dans ledit quart et elle s'étend jusqu'à l'extrémité 28 du plancher bas 5. Ces excroissances 9 accompagnent latéralement le plancher bas 5 et forment un niveau de plancher intermédiaire entre les quarts pivotants 7 et ledit plancher bas.

On distingue encore, figure 2A, le secteur pivotant 20 qui prolonge, à un niveau légèrement inférieur, chaque plate-forme 4, du côté du plancher bas 5. Chaque secteur 20 est délimité par l'arête 29 de la plate-forme 4 d'une part, et la paroi verticale pivotante 18.

Les parois verticales 18 pivotent autour d'un axe 19 et elles sont solidaires des poteaux 30 situés à la pointe des plates-formes 4. Lorsqu'elle est en position déployée, la paroi 18 se situe sensiblement dans le prolongement de la paroi fixe 17 qui correspond à l'arête 14 de la plate-forme 4 et dans le prolongement de la paroi 13 du coffre 11.

La paroi 18 comporte encore un panneau complémentaire 31 d'obturation dont le but est de fermer l'espace entre l'auvent 23 et ladite paroi 18 lorsque l'ensemble est replié.

La figure 2B présente une moitié de kiosque dans sa forme repliée, dans son encombrement minimal lors de son stockage ou pour le transport. Cet encombrement minimum correspond à l'encombrement du châssis 1. Le coffre 11 coulisse sur le plancher central 3 et sur les plates-formes 4, recouvrant partiellement la surface totale du châssis 1 ; dans cette position le panneau 27 obture l'espace laissé entre le fond 15 du coffre 11 et l'extrémité du panneau 17 et plus particulièrement le poteau latéral 32 qui soutient une ferme dont il sera question plus loin ; le panneau 27 est notamment articulé sur ce poteau 32.

On distingue sur cette figure 2B, le secteur pivotant 20 dans sa position rétractée dans l'épaisseur de la plate-forme 4. La paroi verticale 18 solidaire du secteur 20 épouse le contour de ladite plate-forme 4 et le panneau complémentaire 31 est également positionné contre la bordure de la plate-forme 4 ; et il s'étend jusqu'à l'auvent 23 refermé en position de paroi latérale verticale. Le quart pivotant 7 ne peut pivoter de 180° pour prendre sa position représentée figure 2B, qu'après le retrait du plancher bas 5 et son escamotage complet par coulissement sous le châssis 1. Le quart 7 pivote autour de l'axe vertical 8 situé à proximité du coin du plancher central 3. Le côté vertical 33 du quart 7, constitue la paroi latérale de la partie basse et centrale du châssis 1. On remarque également que les côtés 33 des quarts pivotants 7 ont en fait une longueur sensiblement égale à la moitié de la largeur du plancher bas 3 ; l'autre côté des quarts pivotants, c'est-à-dire la face 48, a une longueur qui dépend soit de la largeur du châssis 1 si le plancher 6 n'est qu'un praticable disposé sur le plancher bas 5, soit de l'espace qui reste devant ce plancher 6, sur le plancher bas 5 ; la forme du quart dépend de ces deux possibilités.

A noter que le plancher 6 peut se situer à un niveau sensiblement supérieur à celui des quarts pivotants 7 pour permettre à ces derniers de se loger, en position repliée, dans l'espace libre entre le plancher bas 5 et la partie avant du plancher intermédiaire 6.

L'on peut également observer avec les figures 2A et 2B que l'on obtient presque un triplement de la surface de base du châssis par rapport à la surface totale de base du châssis 1, lorsque tous les éléments sont déployés.

La figure 3 représente le kiosque déployé en coupe transversale. On distingue nettement trois corps : le corps central sur le châssis 1, le coffre arrière 11 et la partie avant sous l'auvent 23. Depuis le fond du coffre 11, les sections du kiosque sont croissantes, pour donner une forme proche de celle d'un pavillon comme il a été dit précédemment. On y distingue encore les différents niveaux de plancher depuis le plancher haut 12 du coffre 11 jusqu'au plancher bas 5, en passant par le plancher central 3, surmonté par la plate-forme 4, le plancher intermédiaire 6 solidaire du plancher bas 5, le plancher du quart pivotant 7, le plancher de l'excroissance 9 qui sort du quart 7, et la portion de plancher du secteur pivotant 20 qui apparait en bout de la plate-forme 4.

De la même façon, la couverture du kiosque s'élève depuis la couverture 16 du coffre, puis la couverture centrale 34 et l'auvent 23 dont l'inclinaison résulte de l'action d'au moins un vérin 35 intercalé entre la ferme centrale 36 et des nervures 37 sous l'auvent. La couverture centrale repose sur trois fermes : la ferme centrale 36 solidaire des poteaux 30, la ferme latérale arrière 38 solidaire des poteaux 32 et la ferme latérale avant 39 soutenue par des traverses 40 fixées aux deux fermes précédentes 36 et 38.

On note également sur cette figure 3, que le fond 15 du coffre 11 est pivotant et peut former également un auvent. De la même façon, les deux autres parois latérales 13 du coffre 11 peuvent se relever et offrir ainsi une vision de la scène sous différents angles.

Dans cette position déployée, les extrémités du coffre 11 et du plancher bas 5 peuvent comporter des béquilles, non représentées, de stabilisation des niveaux afin d'offrir une plus grande rigidité.

On distingue encore sur la figure 3, un rail 41 qui assure le guidage du plancher bas 5 sous le châssis 1.

La figure 4 montre le détail du système de guidage du plancher bas 5, lorsqu'il sort de son emplacement, sous le châssis 1 et plus particulièrement sous le plancher central 3.

Sous le châssis, le plancher 5 est rangé comme un tiroir, figure 3, il repose sur des rails latéraux 41 solidaires du châssis, par l'intermédiaire de roulettes 42 et 43 disposées respectivement à l'extrémité arrière dudit tiroir et, dans la demi moitié vers l'avant, de façon à le soutenir jusqu'au moment où le système de guidage, sur les quarts pivotants 7, prend le relais. Ce système de guidage, disposé de part et d'autre du plancher 5, est constitué d'un galet 44 porté par un bras 45 qui pivote, autour d'un axe 46 parallèle au sens de déplacement dudit plancher 5. Le galet 44 roule dans un rail 47 ouvert du côté du plancher 5 et, solidaire du côté 48 du quart pivotant 7 ; ce côté 48 étant parallèle au sens du déplacement du plancher bas 5. La partie basse du rail 47 se situe au même niveau que le plan inférieur 49 du quart pivotant 7 pour permettre le pivotement dudit quart au-dessus du plancher 5. Le galet 44 est escamotable par pivotement autour de l'axe 46 et se positionne, en position inactive, dans un logement 50 aménagé dans le plancher bas 5, pour permettre également le pivotement du quart 7 qui se positionne normalement, lors du repliement, entre le châssis 1 et le plancher bas 5.

Le bras 45 est encore mobile sur l'axe 46, ce qui permet de le verrouiller en position verticale dans un logement 51 approprié dans le plancher 5. La mise en place des galets 44 dans les rails 47 correspondants, ou leur retrait, s'effectue manuellement ou par tout autre moyen approprié lors de la sortie du plancher bas 5, ou lors de sa remise en place sous le châssis 1. De même, pour éviter toute aspérité, des chapeaux, non représentés, peuvent être positionnés sur les logements 50 lorsque les galets 44 sont en position active de guidage. Par ailleurs, le rail peut être inscrit dans l'épaisseur du quart 7, derrière sa face 48, et le galet 44 peut aussi dans ce cas se présenter sous la forme d'un "diabolo" coopérant avec un rail approprié.

La figure 5 représente, en coupe agrandie selon 5-5 de la figure 3, le système de guidage du coffre 11, situé au niveau du plancher 12. Comme il a été montré figure 2, le plancher 12 est guidé au moyen de coulisses 24 disposées de chaque côté du plancher central 3, et de la plate-forme 4. Cette coulisse 24 de section sensiblement carrée, renferme un coulisseau 25 qui est solidaire de l'extrémité 26 du coffre 11, sous le plancher 12, figure 3. Ce coulisseau 25 repose sur des galets 52 disposés en partie basse, à l'entrée de la coulisse 24. Ces galets 52 assurent le guidage et le centrage du coulisseau entre leurs flancs latéraux 53. Le mouvement des deux coulisseaux 25, situés de chaque côté du plancher central 3, est synchronisé au moyen d'un dispositif par pignon-crémaillère ; les deux pignons 54 étant solidaires au moyen d'un arbre 55 qui s'étend sous le plancher central 3. Les crémaillères 56 sont disposées sous les coulisseaux 25 et elles passent entre les deux galets 52. Pour maintenir un contact permanent entre le pignon 54 et la crémaillère 56, un galet 57, situé au niveau dudit pignon 54, roule sur un rail 58 fixé sur le côté du coulisseau 25. Le galet 57 est monté sur un axe horizontal perpendiculaire au sens de déplacement du coulisseau, à l'intérieur de la coulisse 24.

On a également représenté, figure 5, des éléments de guidage constitués des galets 59, 60 et 61 qui roulent sur les trois faces d'un rail 62 fixé sur la face externe latérale 63 de la coulisse 24. Ces galets sont solidaires de la structure 64, sous le plancher 12, et ils se situent à l'extrémité avant dudit plancher, derrière sa paroi verticale 65, visible notamment figure 1. Ces éléments de guidage sont destinés à éviter le baillement du plancher 12 par rapport au plancher central 3 et aux plates-formes 4 lorsque, en particulier, le châssis de la remorque est légèrement de guingois.

La figure 6 présente une coupe selon 6-6 du système de guidage représenté figure 5. A l'intérieur de la coulisse 24, on retrouve le coulisseau 25 dont l'extrémité 66 est solidaire de l'extrémité 26 du tiroir 11. Ce coulisseau 25 repose sur les galets 52 solidaires de la coulisse 24 à son entrée, et il comporte au moins un galet 67, à son autre extrémité 68, qui roule à l'intérieur de la coulisse 24, sur sa face horizontale interne 69. Un autre galet 70 est disposé à la partie supérieure de l'extrémité 68 du coulisseau 25 ; ce galet 70 roule sur la face horizontale interne 71 de la coulisse 24, et il empêche le basculement du coffre 11 lors de sa sortie

Le pignon 54 est situé à côté des galets 52, vers l'intérieur et il peut recevoir un dispositif de manoeuvre approprié permettant la mise en place du coffre 11 sans effort.

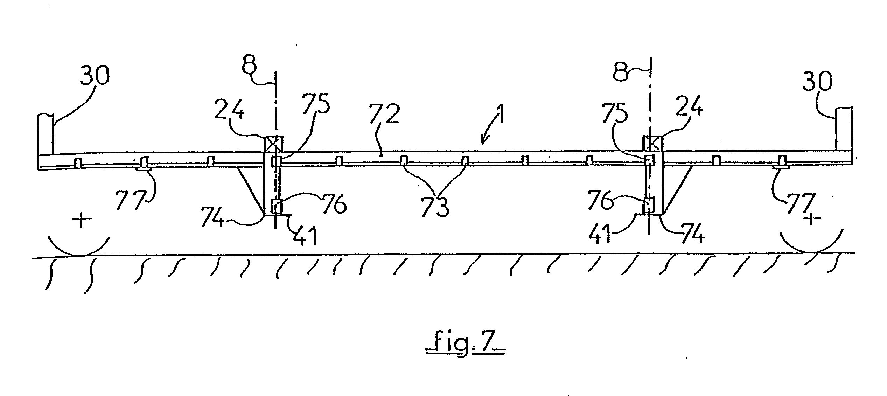

La figure 7 montre le châssis 1, sous les différents planchers. Ce châssis 1 est constitué de façon classique avec au moins deux longerons 72 et des traverses 73 régulièrement réparties. Il comporte, à sa partie inférieure, pour le guidage du plancher bas 5, des rails 41 qui s'étendent sur toute la largeur du châssis ; ces rails 41 étant chacun solidaires d'un berceau 74 sur lequel on trouve également les tourillons 75, 76, qui supportent l'axe 8 d'articulation des quarts pivotants 7. Ces axes 8 sont disposés en bordure, à l'extérieur du châssis 1.

Au même niveau que ces axes 8, on trouve, au-dessus du châssis 1, les coulisses 24 servant au guidage des coulisseaux 25 du coffre 11 et plus particulièrement de son plancher 12.

Aux extrémités du châssis 1, on trouve également les poteaux 30 qui supportent la ferme centrale de la couverture. Sous le châssis 1, on trouve encore des organes 77 d'ancrage et de verrouillage des quarts pivotants 7 lorsqu'ils sont en position déployée.

Le kiosque tel que présenté ci-dessus peut également être adapté, au moyen d'un ou de plusieurs éléments venant s'ajouter, pour des spectacles divers. Le plancher central 3 et les plates-formes 4, par exemple, peuvent recevoir un ou plusieurs praticables amovibles qui procurent, avec le coffre 11, une scène totalement plane. On peut prévoir également l'aménagement de coulisses et de loges aux extrémités du châssis.

De la même façon, on peut doter le coffre d'un plancher coulissant vers l'arrière pour créer une extension complémentaire en profondeur.

Des emplacements particuliers peuvent aussi être prévus pour le rangement d'accessoires comme des roues de secours, des équipements spéciaux comme un panneau de distribution électrique et une centrale hydraulique pour la manoeuvre de l'auvent 23 notamment.

Une telle structure peut également être adaptée sur une autre base que routière et notamment sur une base ferroviaire ou maritime.

L'espace peut encore être doublé, triplé, quadruplé en réalisant un regroupement de plusieurs châssis 1 autour de praticables adaptés.

**Revendications**

1. Espace scénique composé d'un châssis de base (1) allongé, reposant sur pieds ou béquilles et de préférence sur roues, du type muni d'au moins un développement latéral se présentant sous la forme d'au moins un plancher mobile pouvant constituer par ailleurs, un niveau décalé par rapport au plancher central (3) disposé sur le châssis (1), caractérisé en ce qu'il comporte des développements latéraux de part et d'autre du plancher central (3), constitués d'une part, sur l'arrière dudit plancher central (3), d'un plancher haut (12) coulissant sur le plancher central (3) et, d'autre part, sur la partie avant dudit plancher central (3), d'un plancher bas (5) coulissant sous le plancher central (3), ledit plancher bas (5) étant associé, de part et d'autre, à des planchers latéraux (7d et 7g) en forme de quart de cercle, ou d'ellipse, pivotant autour d'axes verticaux (8) disposés à proximité des coins du plancher central (3).

2. Espace scénique selon la revendication 1, caractérisé en ce que les planchers latéraux (7d et 7g) sont disposés, en position repliée, entre le châssis (1) et le plancher bas (5) et supportent ledit plancher bas (5) lors de son déploiement et aussi en position déployée.

3. Espace scénique selon la revendication 2, caractérisé en ce que les quarts pivotants (7d et 7g) comportent, en position déployée, des moyens de guidage coopérant avec des organes escamotables disposés sur le plancher bas (5).

4. Espace scénique selon la revendication 3, caractérisé en ce que les moyens de guidage du plancher bas (5) sur chaque quart pivotant (7) sont constitués d'un rail de guidage (47) disposé sur la face (48) dudit quart pivotant (7), ce rail (47) coopérant avec un galet (44) solidaire d'un bras (45) escamotable avec le galet dans un logement (50) dudit plancher bas, par pivotement autour d'un axe (46) parallèle au sens de déplacement dudit plancher bas (5).

5. Espace scénique selon l'une des revendications 1 à 4, caractérisé en ce que le plancher central (3) se prolonge longitudinalement par des plates-formes (4d et 4g) surélevées se terminant en pointe à chaque extrémité du châssis, ces plates-formes se situent à un niveau inférieur au niveau du plancher haut (12) qui les recouvre partiellement.

6. Espace scénique selon la revendication 5, caractérisé en ce que les plates-formes (4) comportent, dans leur épaisseur, du côté des quarts pivotants (7), un secteur (20d et 20g) formant plancher, et qui pivote autour d'un axe vertical (19) situé sensiblement à la pointe desdites plates-formes (4), en position déployée, l'arête externe de ces secteurs (20) se situant dans le prolongement des arêtes (14d et 14g) des plates-formes (4) correspondantes.

7. Espace scénique selon l'une quelconque des revendications 1 à 6, caractérisé en ce que le plancher haut (12) est guidé en translation au moyen de coulisses (24) disposées de part et d'autre du plancher central (3), contre les plates-formes (4) et de coulisseaux (25) solidaires de l'extrémité (26) dudit plancher haut (12) ; les coulisseaux (25) du coffre (11) roulent sur des galets (52) situés à l'entrée de chaque coulisse (24) et comportent chacun une crémaillère (56) coopérant avec un pignon (54) ; les deux pignons (54) étant solidaires l'un de l'autre par un arbre (55) commun disposé sous le plancher central (3).

8. Espace scénique selon l'une quelconque des revendications 1 à 7, caractérisé en ce qu'il est constitué de trois corps principaux prenant, en position déployée, une forme de pavillon ou de conque :
   – un corps central constitué du plancher central (3), des plates-formes (4), des parois latérales (17 et 18) et d'une couverture (34) supportée par une ferme centrale (36) solidaire des poteaux extrêmes verticaux (30), et par deux fermes latérales (38 et 39),
   – un corps arrière en forme de coffre (11) bâti sur le plancher haut (12) comportant des parois latérales (13d et 13g), un fond (15) et une couverture (16),
   – un corps avant constitué des différents planchers avant, le plancher bas (5) et les quarts pivotants (7) et constitué d'un auvent (23) articulé sur une ferme frontale (39) et faisant office de paroi verticale en position repliée, cet auvent étant actionné par au moins un vérin (35).

9. Espace scénique selon la revendication 8, caractérisé en ce que les parois verticales latérales (17d et 17g) sont solidaires du châssis et supportent la charpente constituée des fermes centrale (36) et latérales (38 et 39), et en ce que les parois latérales (18d et 18g) sont pivotantes avec les secteurs (20d et 20g) autour d'axes verticaux (19) solidaires des poteaux d'extrémité (30) du châssis (1) ; ces parois latérales (18) supportant des éléments de couverture en forme de quadrilatères qui rejoignent l'auvent (23) au moyen d'éléments de couvertures triangulaires (22d et 22ᵍ articulés sur ledit auvent.

10. Espace scénique selon la revendication 2, caractérisé en ce que les quarts pivotants (7) comportent des excroissances (9d et 9g) escamotables, en forme de tiroir coulissant dans l'épaisseur desdits quarts.

11. Châssis pour espace scénique selon l'une quelconque des revendications 1 à 10, du type comportant des longerons (72) s'étendant sur toute la longueur de la scène et des traverses (73) régulièrement réparties, caractérisé en ce qu'il comporte, à sa partie inférieure, pour le guidage du plancher bas (5), des rails (41) s'étendant sur toute la largeur du châssis et qui sont solidaires chacun d'un berceau (74) sur lequel sont fixés des tourillons (75 et 76) destinés à supporter les axes (8) des quarts pivotants (7).

12. Châssis pour espace scénique selon la revendication 11, caractérisé en ce qu'il comporte, à sa partie supérieure, au-dessus des berceaux (74), des coulisses (24) de section carrée, s'étendant sur toute la largeur du châssis, destinées au guidage des coulisseaux (25) solidaires du plancher haut (12).

13. Espace scénique caractérisé en ce qu'il est constitué d'un regroupement, autour d'un praticable adapté, de plusieurs châssis selon la revendication 12.

**Ansprüche**

1. Bühnenraum, zusammengesetzt aus einem ausziehbaren Chassis, welches auf Füßen oder Stützen und vorzugsweise auf Rädern steht, in der Grundform versehen mit wenigstens einer seitlichen Entfaltungsmöglichkeit, wobei mindestens ein beweglicher Bodenteil mit unterschiedlicher Höhe im Verhältnis zu dem am Chassis (1) angeordneten zentralen Boden (3) gebildet werden kann, dadurch gekennzeichnet, daß auf beiden Seiten des zentralen Bodens (3) seitliche Entfaltungsmöglichkeiten vorhanden sind, bestehend zum einen, an der Rückseite des besagten zentralen Bodens (3), aus einem erhöhten Bodenteil (12), welcher über den zentralen Boden (3) gleitet, und zum anderen, an der Vorderseite des besagten zentralen Bodens (3), aus einem niedrigeren Bodenteil (5), welcher unter den besagten zentralen Boden (3) gleitet und an beiden Seiten mit seitlichen Bodenteilen (7d und 7g) verbunden ist, deren Form dem Viertel eines Kreises oder einer Ellipse entspricht und die um in der Nähe der Ecken des zentralen Bodens (3) angeordnete senkrechte Achsen (8) drehbar sind.

2. Bühnenraum nach Anspruch 1, dadurch gekennzeichnet, daß die seitlichen Bodenteile (7d und 7g) sich in zusammengeklapptem Zustand zwischen dem Chassis (1) und dem niedrigeren Bodenteil (5) befinden und besagten niedrigeren Bodenteil (5) wärend dessen Ausfahrens sowie in ausgefahrener Position abstützen.

3. Bühnenrahmen nach Anspruch 2, dadurch gekennzeichnet, daß die drehbaren Viertel (7d und 7g) in aufgeklapptem Zustand wirksam werdende Führungseinrichtungen aufweisen, welche mit in dem niedrigeren Bodenteil (5) versenkbar angeordneten Elementen zusammenarbeiten.

4. Bühnenraum nach Anspruch 3, dadurch gekennzeichnet, daß die in den drehbaren Vierteln (7) vorhandenen Einrichtungen zum Führen des niedrigen Bodenteils (5) von je einer an der Seite (48) der besagten drehbaren Viertel (7) angebrachten Führungsschiene (47) gebildet werden und diese Schiene (47) mit einer an einem Arm (45) gelagerten Laufrolle (44) zusammenwirkt, wobei der Arm (45) mitsamt der Laufrolle (44) durch Drehung um eine zur Bewegungsrichtung des besagten niedrigeren Bodenteils parallele Achse (46) in eine Vertiefung (50) des niedrigeren Bodenteils (5) versenkbar ist.

5. Bühnenraum nach einem der Ansprüche 1 bis 4, dadurch gekennzeichnet, daß sich der zentrale Boden (3) in Längsrichtung durch die aufgestockten Plattformen (4d und 4g) fortsetzt, die sich bis zu den äußersten Punkten des Chassis erstrecken und sich auf einer Höhe unterhalb der des hohen Bodens (12) befinden, welcher sie teilweise bedeckt.

6. Bühnenraum nach Anspruch 5, dadurch gekennzeichnet, daß die Plattformen (4) in ihrer Dicke, im Anschluß an die drehbaren Viertel (7), einen Teil des Bodens formende Sektoren (20d und 20g) enthalten und diese sich um je eine an der Spitze besagter Plattformen (4) angeordnete Achse (19) in die ausgeklappte Position drehen, in der die äußere Kante dieser Sektoren (20) sich in der Verlängerung der Kanten (14 d und 14g) der korrespondierenden Plattform (4) befindet.

7. Bühnenraum nach irgendeinem der Ansprüche 1 bis 6, dadurch gekennzeichnet, daß der erhöhte Boden (12) in seiner Translationbewegung geführt wird von Schienen (24), welche zu beiden Seiten des zentralen Bodens (3) an den Plattformen (4) angebracht sind und von Führungsstreben (25), welche an dem rückwärtigen Abschluß (26) besagten erhöhten Bodens (12) befestigt sind ; die Führungsstreben (25) des Raums (11) rollen auf an der Öffnung jeder Führungsschiene (24) angeordneten Laufrädern (52) und enthalten je eine Zahnstange (56), welche mit einem Ritzel (54) zusammenwirkt ; die zwei Ritzel (54) sind miteinander mit einer Welle (55) verbunden, welche sich unter dem zentralen Boden (3) befindet.

8. Bühnenraum nach irgendeinem der Ansprüche 1 bis 7, dadurch gekennzeichnet, daß er aus drei Hauptkomponenten besteht, welche in ausgefahrenem Zustand die Gestalt eines Pavillons oder einer Muschel umfassen :

– Ein Zentralkörper, zusammengesetzt aus dem zentralen Boden (3), den Plattformen (4), den Seitenwänden (17 und 18) und einer Überdachung (34), welche sich auf den mit den äußeren vertikalen Pfosten (30) verbundenen zentralen Träger (36) und zwei seitliche Träger (38 und 39) stützt,

– eine rückwärtige Baugruppe in Form eines auf dem erhöhten Boden (12) aufgebauten Raums (11), welcher seitliche Wände (13d und 13g), eine Rückwand (15) und eine Überdachung (16) aufweist,

– eine vordere Baugruppe, gebildet aus verschiedenen vorderen Böden, dem niedrigen Boden (5) und den drehbaren Vierteln (7), und einem mit dem vorderen Dachträgern (39) gelenkig verbundenen Vordach (23), welches in zusammengeklapptem Zustand als senkrechte Wand dient und mittels einer Schraubenwinde (35) betätigt wird.

9. Bühnenraum nach Anspruch 8, dadurch gekennzeichnet, daß die vertikalen Seitenwände (17d und 17g) mit dem Chassis verbunden sind und das aus dem zentralen Träger (36) und den seitlichen Trägern (38 und 39) bestehende Balkenwerk tragen, und dadurch, daß sich die Seitenwände (18d und 18g) zusammen mit den Sektoren (20d und 20g) um die senkrechten Achsen (19), welche an den äußeren Pfosten (30) des Chassis (1) befestigt sind, drehen ; diese Seitenwände (18) tragen die Überdachungselemente mit der Form von Vierecken, welche sich zu dem Vordach (23) hin falten mittels der dreieckigen, an das Vordach (23) passenden Überdachungselemente (22d und 22g).

10. Bühnenraum nach Anspruch 2, dadurch gekennzeichnet, daß die drehbaren Viertel (7) einziehbare Zusatzelemente (9d und 9g) in Form von innerhalb der Dicke besagter Viertel gleitender Einschübe aufweisen.

11. Chassis für einen Bühnenraum nach irgendeinem der Ansprüche 1 bis 10, in der Grundform bestehend aus Holmen (72), welches sich über die gesamte Länge der Bühne erstrecken, und aus gleichmäßig verteilten Querbalken (73), dadurch gekennzeichnet, daß es in seinem unteren Teil Schienen (41) zur Führung des niedrigen Bodens (5) enthält, welche sich über die gesamte Breite des Chassis erstrecken und wovon jede mit einer Wiege (74) verbunden ist, an der außerdem die zum Tragen der Achsen (8) der drehbaren Viertel (7) bestimmten Drehzapfen (75 und 76) befestigt sind.

12. Chassis für einen Bühnenraum nach Anspruch 11, dadurch gekennzeichnet, daß er in seinem oberen Teil, oberhalb der Wiegen (74), Führungsschienen (24) mit viereckigem Querschnitt enthält, die sich über die gesamte Breite des Chassis ausdehnen und zur Führung der mit dem erhöhten Boden (12) verbundenen Führungsstreben (25) bestimmt sind.

13. Bühnenraum, dadurch gekennzeichnet, daß er von einer Gruppierung mehrerer Chassis nach Anspruch 12 um eine geeignete verstellbare Plattform gebildet wird.

## Claims

1. Scenic space comprising of an elongate base chassis (1) resting on legs or props and preferably on wheels, of the type provided with at least one side extension which is in the form of at least one mobile floor capable, furthermore, of forming a level which is offset in relation to the central floor (3) arranged on the chassis (1), characterized in that it comprises side extensions on each side of the central floor (3), which consist, on the one hand, at the rear of the said central floor (3), of a high floor (12) sliding over the central floor (3) and, on the other hand, on the front part of the said central floor (3) of a low floor (5) sliding under the central floor (3) the said low floor (5) being linked on each side with side floors (7d and 7g) in the form of a quarter of a circle, or of an ellipse, pivoting around vertical shafts (8) arranged close to the corners of the central floor (3).

2. Scenic space according to Claim 1, characterized in that the side floors (7d and 7g) are arranged, in a folded position, between the chassis (1) and the low floor (5) and support the said low floor (5) when it is being unfolded and also in an unfolded position.

3. Scenic space according to Claim 2, characterized in that the pivoting quarters (7d and 7g) comprise, in an unfolded position, guidance means interacting with retractable members arranged on the low floor (5).

4. Scenic space according to Claim 3, characterized in that the means for guiding the low floor (5) on each pivoting quarter (7) consist of a guidance rail (47) arranged on the face (48) of the said pivoting quarter (7), this rail (47) interacting with a roller (44) integrally fastened to an arm (45) capable of retracting with the roller into a housing (50) in the said low floor, by pivoting around a shaft (46) parallel to the direction of travel of the said low floor (5).

5. Scenic space according to one of Claims 1 to 4, characterized in that the central floor (3) is extended length-wise by means of raised platforms (4d and 4g) ending in a point at each end of the chassis, these platforms being situated at a level lower than the level of the high floor (12) which partly overlaps them.

6. Scenic space according to Claim 5, characterized in that the platforms (4) comprise, in their thickness, on the side of the pivoting quarters (7), a section (20d and 20g) forming a floor, and pivoting around a vertical shaft (19) situated substantially at the point of the said platforms (4), in an unfolded position, the outer ridge of these sections (20) being situated in the extension of the ridges (14d and 14g) of the corresponding platforms (4).

7. Scenic space according to any one of Claims 1 to 6, characterized in that the high floor (12) is guided in translation by means of tracks (24) arranged on each side of the central floor (3), against the platforms (4) and of sliding members (25) integrally fastened to the end (26) of the said high floor (12) ; the sliding members (25) of the box (11) travel on rollers (52) situated at the entry of each track (24) and each comprises a rack (56) interacting with a pinion (54) ; the two pinions (54) being integrally joined together by means of a common shaft (55) arranged under the central floor (3).

8. Scenic space according to any one of Claims 1 to 7, characterized in that it is composed of three main bodies taking, in an unfolded position, the shape of a pavilion or of a shell :

– a central body consisting of the central floor (3), platforms (4), side walls (17 and 18) and of a roof (34) supported by a central truss (36) integrally fastened to the vertical outermost posts (30), and by two side trusses (38 and 39),

– a rear body in the shape of a box (11) built on the high floor (12) comprising side walls (13d and 13g), a back (15) and a roof (16), and

– a front body consisting of the various front floors, the low floor (5) and the pivoting quarters (7) and consisting of a canopy (23) articulated to a front truss (39) and serving as a vertical wall in a folded position, this canopy being actuated by at least one jack (35).

9. Scenic space according to Claim 8, characterized in that the side vertical walls (17d and 17g) are integrally fastened to the chassis and support the scaffolding consisting of the central (36) and side (38 and 39) trusses and in that the side walls (18d and 18g) pivot with the sections (20d and 20g) around vertical shafts (19) integrally fixed to the outermost posts (30) of the chassis (1) ; these side walls (18) supporting roof members in the form of quadrilaterals which are joined to the canopy (23) by means of triangular roof members (22d and 22g) articulated to the said canopy.

10. Scenic space according to Claim 2, characterized in that the pivoting quarters (7) comprise retractable excrescences (9d and 9g), in the form of a drawer sliding in the thickness of the said quarters.

11. Chassis for the scenic space according to any one of Claims 1 to 10, of the type comprising lengthwise members (72) extending over the entire length of the stage and uniformly distributed crossbars (73), characterized in that it comprises, in its lower part, for guiding the low floor (5), rails (41) extending over the entire width of the chassis and each of which is integrally fastened to a cradle (74) on which are fixed journals (75 and 76) intended to support the shafts (8) of the pivoting quarters (7).

12. Chassis for a scenic space according to Claim 11, characterized in that it comprises, in its upper part, above the cradles (74), tracks (24) of square cross-section, extending over the entire width of the chassis, and intended for guiding the sliding members (25) integrally fastened to the high floor (12).

13. Scenic space characterized in that it is composed of a group of several chassis according to Claim 12, around an appropriate riser.

Fig. 1

_fig. 2B_

_fig. 2A_

Fig. 3

_fig.4_

fig. 5

Fig.6

fig.7